Europäisches Patentamt

European Patent Office

Office européen des brevets

(11) Veröffentlichungsnummer: **0 603 641 A2**

# EUROPÄISCHE PATENTANMELDUNG

(21) Anmeldenummer: **93119747.9**

(51) Int. Cl.⁵: **H04J 3/06**, H04J 3/12

(22) Anmeldetag: **08.12.93**

(30) Priorität: **22.12.92 DE 4243442**

(43) Veröffentlichungstag der Anmeldung:
**29.06.94 Patentblatt 94/26**

(84) Benannte Vertragsstaaten:
**AT BE CH ES FR GB LI NL**

(71) Anmelder: **ANT Nachrichtentechnik GmbH**
**Gerberstrasse 33**
**D-71522 Backnang(DE)**

(72) Erfinder: **Bubeck, Helmut, Dipl.-Ing. (BA)**
**Asterweg 3**
**D-71706 Markgröningen(DE)**

(54) **Betriebsverfahren für ein Zeitmultiplex-Übertragungssystem sowie Zeitmultiplex-Übertragungssystem.**

(57) Bei einem Zeitmultiplex-Übertragungssystem werden die Datenströme von Teilnetzen an Netzknoten zeitkanalsynchron miteinander verknüpft, um kurze Systemlaufzeiten zu erreichen.

Diese zeitkanalsynchrone Verknüpfung hat zur Folge, daß die Nummer eines Sendezeitkanals nicht mit der Nummer des Zeitkanals im Empfangsweg übereinstimmt. Nach der Erfindung wird der Zeitversatz (Offset), den die Datenströme bei der Verknüpfung im Netzknoten erfahren, von Station zu Station in einem Dienstkanal weitergereicht.

Fig. 6

Die Erfindung geht aus von einem Betriebsverfahren für ein Zeitmultiplex-Übertragungssystem gemäß dem Oberbegriff des Patentanspruches 1.

Aus NTG Fachberichte, Band 80, März 1982, Seiten 157 bis 164 ist ein digitales Zeitmultiplex-Übertragungssystem bekannt, welches als linien- wie auch als sternförmiges synchrones Verzweigungsnetz aufgebaut werden kann. An eine zentrale Busstation werden dezentrale Busstationen beispielsweise über jeweils ein Schleifennetz angeschlossen. An die dezentralen Busstationen können jeweils mehrere Teilnehmer angeschlossen werden. Jeder Teilnehmer kann in diesem DIKOS-System gleichberechtigt einen Verbindungswunsch absetzen. Die Teilnehmer in jedem Schleifennetz können in Zeitkanälen eines Rahmens Daten empfangen und absenden. Der die dezentralen Busstationen eines Teilnetzes verbindende Bus besteht aus einer Sende- und einer Empfangsleitung.

Die von den Busstationen in eine Sendeleitung eingespeisten Informationen werden an einer Datenumleitstelle in die Empfangsleitung der jeweiligen Teilnetze umgeleitet, aus der die Busstationen die an sie gerichteten Daten entnehmen. Die Übertragung erfolgt im Zeitmultiplex, so daß dieses System eine Taktzentrale und einen Rahmensynchronisiergenerator erfordert, die zweckmäßigerweise in der zentralen Busstation untergebracht sind. Jeder Sendeleitung ist eine Laufzeitausgleichseinheit in Form eines Laufzeitspeichers zugeordnet, der die Laufzeitunterschiede zwischen dem Rahmen auf der Sendeleitung und dem Rahmen vom Rahmensynchronisiergenerator anpaßt. Jede Teilnehmerstation empfängt die Summe aller im Netz vorhandenen Daten, wertet jedoch nur diejenigen aus, die an sie adressiert sind. Die von einer Busstation auszusendenden Daten werden bei DIKOS (s. auch NTZ, Band 34, 1981, Heft 10, Seite 658 bis 663) stets im gleichen Zeitkanal auf der Sendeleitung eingespeist und damit auf dem gleichen Zeitkanal (Zeitschlitz) wiedergefunden. Um Doppelbelegungen eines Zeitkanals zu vermeiden, sucht zu Beginn einer Verbindung der initiierende Teilnehmer auf der Empfangsleitung einen freien Zeitkanal und sendet, wenn dieser gefunden ist, im selben Zeitkanal der Sendeleitung einen Ruf an einen gewünschten anderen Teilnehmer. Die Summe aller übertragenen Daten wird in der gleichen Reihenfolge auf der Empfangsleitung zu den Teilnehmern übertragen.

Bei Netzverzweigungen werden die Sendedatenströme rahmensynchron zusammengefaßt und zur zentralen Busstation übertragen, welche diese zusammengefaßten Datenströme wiederum in alle Teilnetze einspeist. Damit sind die im Sendeweg eingeschleusten Daten im Empfangsweg in demselben Zeitkanal zu empfangen.

Aufgabe vorliegender Erfindung ist es, gewisse Nachteile dieses Zeitmultiplex-Übertragungssystems zu überwinden. Insbesondere sollen die Systemlaufzeiten verkürzt und Kontrollbelegungen entbehrlich sein. Diese Aufgabe wird bezüglich des Betriebsverfahrens durch die Schritte des Anspruchs 1 und bezüglich des Zeitmultiplex-Übertragungssystems durch die Merkmale des Anspruches 5 gelöst. Die übrigen Ansprüche betreffen Ausgestaltungen des Verfahrens bzw. des Übertragungssystems.

Der Nachteil des aus vorgenannter Veröffentlichung bekannten Zeitmultiplex-Übertragungssystems ist insbesondere darin zu sehen, daß es in den Verzweigungen (Netzknoten) zu Laufzeiten von bis zu einem Rahmen kommt. Die Anzahl der Verzweigungen (Netzknoten) in der direkten Verbindung zur taktgebenden Station, multipliziert mit der Zeitdauer eines Rahmens, ergibt die Laufzeit eines Datums nach Aussenden bis zum Empfang im Empfangsrahmen. Diese Systemlaufzeit verlängert die Verbindungsaufbauzeiten von Sprach- und Datenverbindungen erheblich, zudem eventuell auftretende Kollisionen unter zusätzlichem Zeitaufwand aufzulösen sind. Hauptsächlich bei breitbandigen Datenübertragungen kommt es zu Wartezeiten oder Datenverlust bei den Endgeräten.

Durch die zeitkanalsynchrone Zusammenfassung der Datenströme in den Netzknoten wird die Verweildauer der einzelnen Zeitkanäle in der Laufzeitausgleichseinheit erheblich reduziert und damit die Systemlaufzeit insgesamt verkürzt. Da Kollisionen erst nach Ablauf der Systemlaufzeit erkannt werden, ist beim Zeitmultiplex-Übertragungssypstem nach der Erfindung ein neuer Belegungsversuch bereits nach kurzer Zeit möglich. Jeder Netzteilnehmer erhält durch die kurze Systemlaufzeit eine längere Verarbeitungszeit (Verarbeitungszeit = Rahmendauer - Systemlaufzeit) bis zum nächsten Zugriff auf den/die zugeordneten Zeitkanal/Zeitkanäle.

Bei den Maßnahmen der Erfindung ist eine Kontrollbelegung zur Ermittlung des Zeitversatzes (Offset) bei der Verknüpfung der Datenströme entbehrlich. Ein weiterer Vorteil liegt darin, daß bei einem Netzaufbau aus redundanten Verbindungen, diejenigen mit der kürzesten Laufzeit ausgewählt werden können. Durch die Überwachung des fest vorgegebenen Zeitversatzes können Netzänderungen sofort erkannt werden. Zeitversatzänderungen sind auch sofort in der Interfaceebene erkennbar.

Anhand der Zeichnungen werden nun Ausführungsbeispiele der Erfindung im Vergleich zu einem bisherigen Zeitmultiplex-Übertragungssystem erläutert. Es zeigen beispielhaft

Fig. 1 den Aufbau eines Zeitmultiplexrahmens,

Fig. 2 ermittelte Laufzeiten für ein bisheriges Zeitmultiplex-Übertragungssystem,

Fig. 3 die Zusammenfassung der Daten aus Teilnetzen bei einer Verzweigung,

Fig. 4 ein Beispiel für eine Netztopologie,

Fig. 5 ein Blockschaltbild einer Busstation,

Fig. 6 Einzelheiten einer Busstation,

Fig. 7 die Initialisierung des Empfangspuffers einer Busstation,

Fig. 8 die Systemlaufzeiten für ein Zeitmultiplex-Übertragungssystem nach der Erfindung,

Fig. 9 den Zeitversatz der Rahmen für 6 Busstationen.

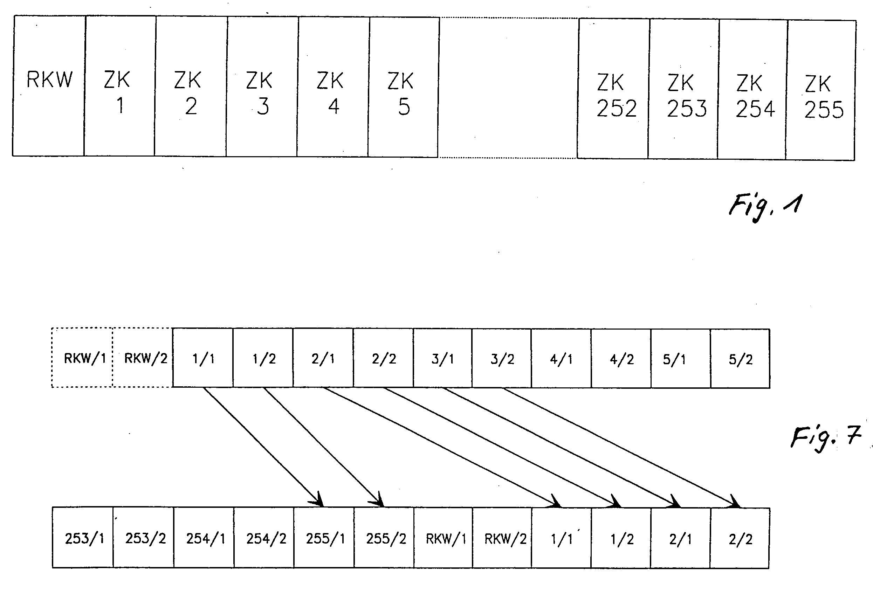

Fig. 1 zeigt den Aufbau eines Zeitmultiplexrahmens, wie er üblicherweise für Zeitmultiplex-Übertragungssysteme verwendet wird. In diesem Beispiel umfaßt der Rahmen insgesamt 256 Zeitkanäle (Zeitschlitze). Der erste Zeitkanal eines Rahmens ist jeweils mit dem Rahmenkennungswort RKW belegt, so daß 255 Nutzkanäle ZK1 bis ZK255 zur Verfügung stehen. Die Gesamtbitrate beträgt 9,216 MBit/s. Auf einen Zeitkanal entfallen 18 Bit und die Bitrate pro Zeitkanal beträgt 32 kBit/s.

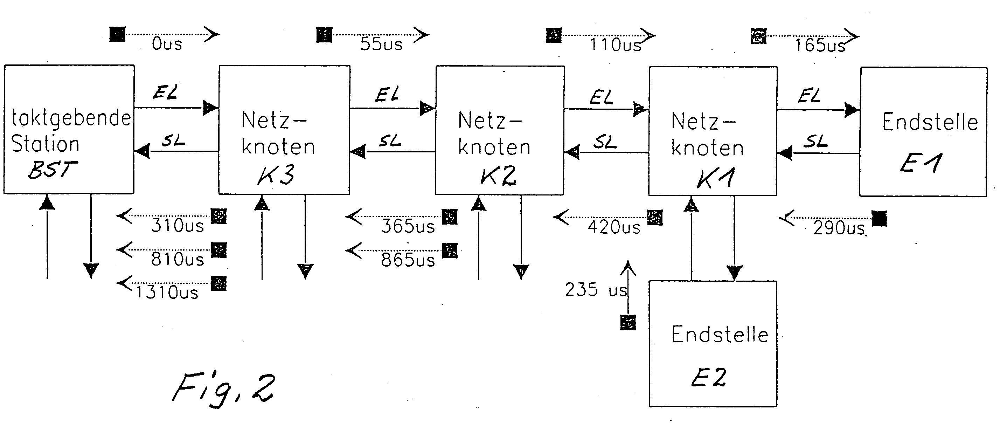

Um ein Maß für die Systemlaufzeiten zu erhalten, sind in Fig. 2 die Systemlaufzeiten des bekannten DIKOS-Zeitmultiplexsystems mit rahmensynchroner Verarbeitung dargestellt. Im dargestellten Beispiel sind zwischen der taktgebenden Busstation und zwei Endstellen drei Verzweigungen (Netzknoten) vorgesehen. Die Verbindung erfolgt jeweils über einen Datenbus mit Sendeleitung SL und Empfangsleitung EL. Die punktierten Pfeile kennzeichnen jeweils die Zeitpunkte, an denen ein Rahmen vom entsprechenden Verknüpfungspunkt (Netzknoten, Endstelle) ausgesendet wird. Der Zeitnullpunkt ist durch das Aussenden eines Rahmens durch die taktgebende Busstation bestimmt.

In der Endstelle (Teilnehmer) E1 werden die Daten zum Zeitpunkt 290 µs in den Rahmen eingeschleust. Der erste Netzknoten K1 sendet den Rahmen zum Zeitpunkt 420 µs aus. Beim zweiten Knoten K2 ist der Rahmen bereits zum Zeitpunkt 365 µs ausgesendet worden, so daß hier auf den nächsten Rahmen bei 865 µs gewartet werden muß. Der letzte Netzknoten K3 sendet die Daten zum Zeitpunkt 1310 µs an die taktgebende Busstation BST. Der nächste Rahmen geht zum Zeitpunkt 1500 µs von der taktgebenden Busstation BST ab und erreicht die Endstelle E1 nach 1665 µs (die Pfeile in Fig. 2 geben jeweils die summierten Laufzeiten an). Die Systemlaufzeit vom Aussenden bis zum Empfang beträgt für die Endstelle E1 demnach insgesamt:

1665 µs - 290 µs = 1375 µs,

was der Dauer von ca. drei Rahmen entspricht.

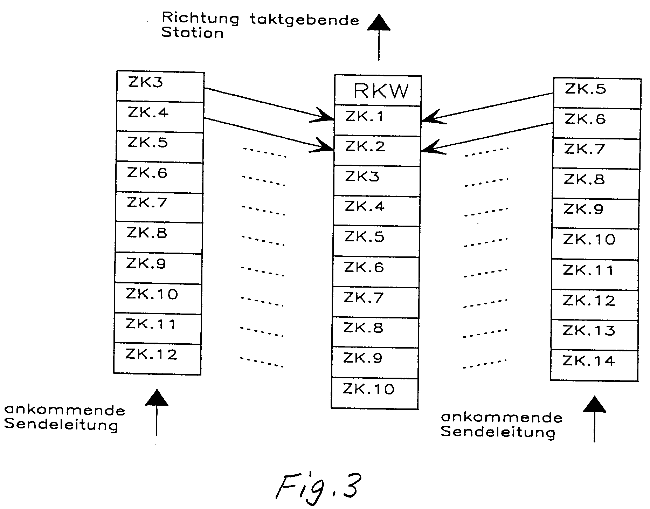

Fig. 3 zeigt die Zusammenfassung der Daten nach der Erfindung. Anstelle einer rahmensynchronen Zusammenfassung wird eine zeitkanalsynchrone Zusammenfassung der Daten, d.h. eine Zusammenfassung der Rahmen in den Teilnetzen im Zeitkanalraster, jeweils bei eine Verknüpfungspunkt (Netzknoten) vorgenommen und der zusammengefaßte Datenstrom in einem neuen Rahmen, der von einer Busstation beim Netzknoten vorgegeben wird, zur zentralen taktgebenden Busstation übertragen, welche diesen Rahmen wiederum in alle an die zentrale taktgebende Busstation BST angeschlossenen Teilnetze einspeist.

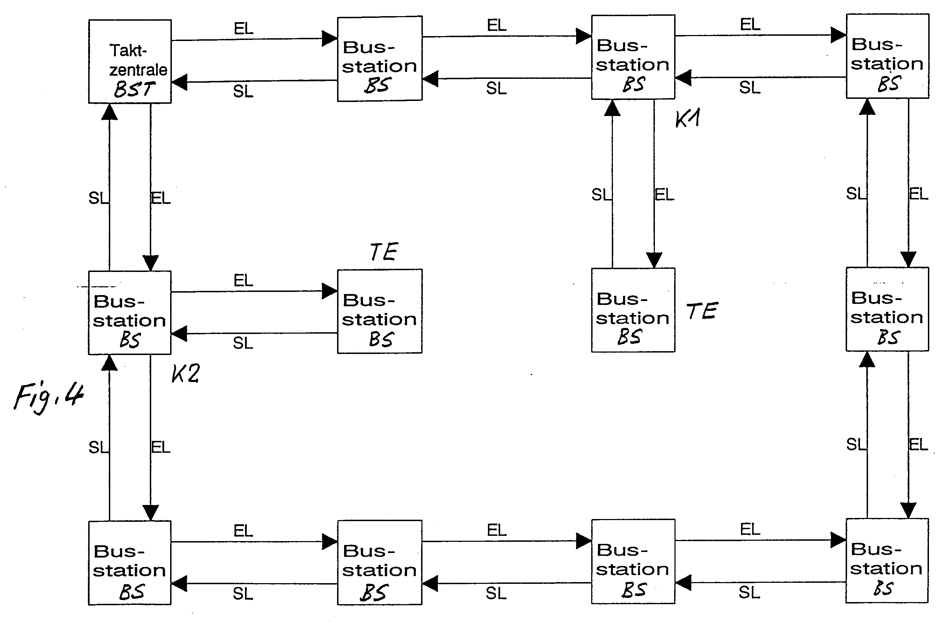

Fig. 4 zeigt ein Beispiel für eine Netztopologie eines Zeitmultiplex-Übertragungssystems, bei dem die Erfindung einsetzbar ist. Es sind dort mehrere Netzknoten (Verknüpfungspunkt) K1, K2 vorhanden, an denen jeweils eine Busstation BS vorgesehen ist. Vorteilhafterweise wird das Übertragungssystem aus gleich aufgebauten Busstationen gebildet, die durch entsprechende Einstellung oder Steuerung als taktgebende Station BST, als Verzweigung bzw. Netzknoten oder als Teilnehmerendstelle TE betreibbar sind. An jede dieser Stationen kann außerdem ein Teilnetz mit einem oder mehreren Teilnehmern angeschlossen sein.

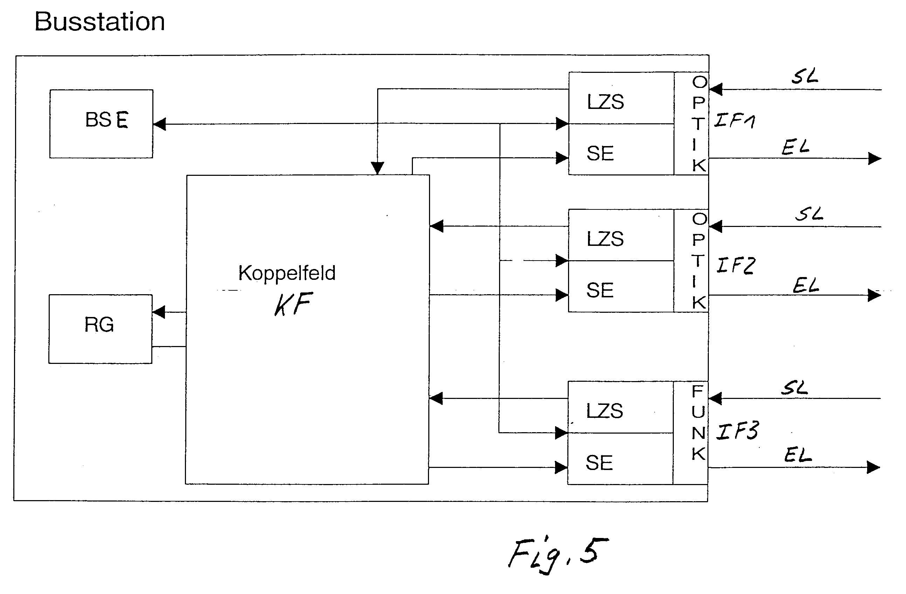

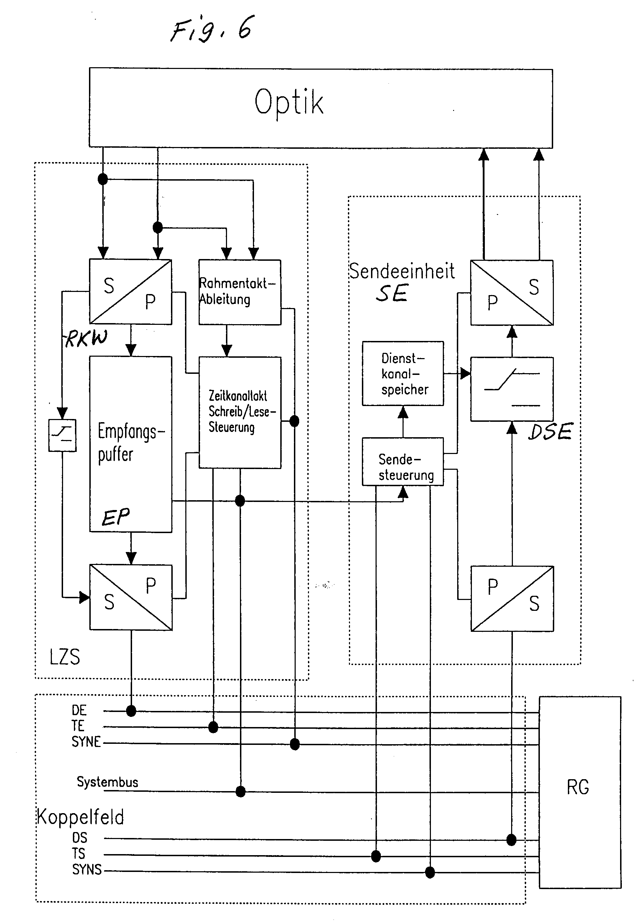

Fig. 5 zeigt ein Blockschaltbild für solch eine Busstation. Je nach Anzahl der in einer Verzweigung (Netzknoten) zusammenlaufenden Teilnetze (Busse jeweils bestehend aus Sende- und Empfangsleitung SL bzw. SE) und dem zu einem weiteren Netzknoten oder zur taktgebenden Busstation BST führenden Bus sind entsprechend viele Interface-Schaltungen, im Beispiel IF1, IF2, IF3, vorgesehen, die jeweils aus einer Laufzeitausgleichseinheit LZS, einer Sendeeinheit SE und einer übertragungsmediumgeeigneten Ausgangsstufe, hier mit Optik bzw. Funk bezeichnet, bestehen. Die Ausgänge aller Laufzeitausgleichseinheiten LZS sind über ein Koppelfeld KF mit den Sendeeinheiten SE ihrer eigenen Interface-Schaltungen sowie den Sendeeinheiten SE der anderen Interface-Schaltungen verbindbar. Das Koppelfeld KF wird über einen Rahmengenerator RG gesteuert. Die Steuerung der Laufzeitausgleichseinheiten LZS und der Sendeeinheiten SE erfolgt über die Bussteuerung BST. Einzelheiten einer solchen Busstation sind in Fig. 6 dargestellt.

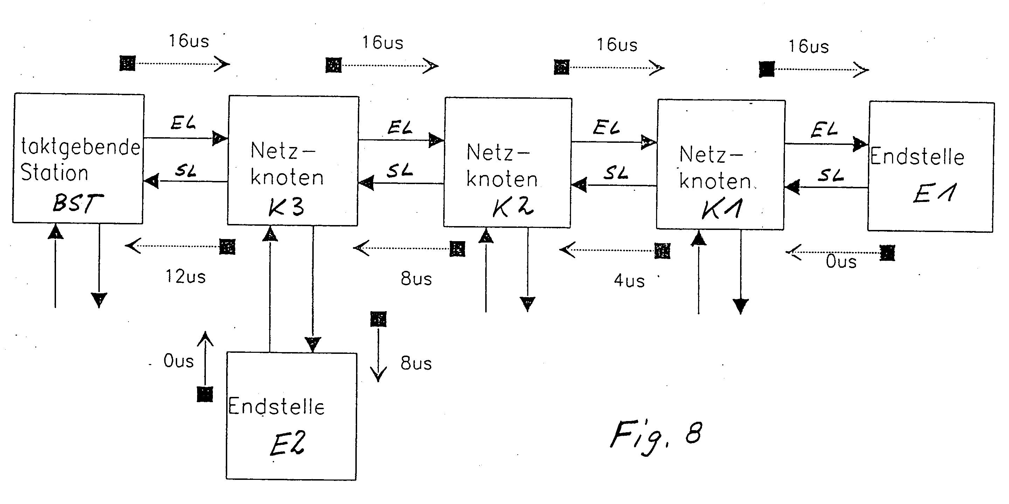

Für die erfindungsgemäße zeitkanalsynchrone Zusammenfassung der Daten wird jeder Zeitkanal nur um die Dauer weniger Zeitkanäle, im Ausführungsbeispiel maximal um die Dauer von zwei Zeitkanälen, entsprechend 3,906 µs, in einer Laufzeitausgleichseinheit LZS zwischengespeichert. Da der Rahmen auf dem Sendeweg, d.h. in Richtung taktgebende Busstation BST, einen festen Bezug zum Rahmen auf der Empfangsleitung EL hat, können die Rahmen auf den Sendeleitungen SL eines Netzknotens verschiedene Zeitverschiebungen annehmen. Dadurch werden in einem Netzknoten Zeitkanäle mit verschiedenen Nummern verknüpft (Fig. 3). Für die Verknüpfung der Zeitkanäle über die Laufzeitausgleichseinheiten LZS und das Koppelfeld KF werden im Netzknoten die Rahmenkennungsworte RKW der ankommenden Sendeleitungen ausgefiltert. Richtung taktgebende Busstation BST bildet sich der neue Zeitkanal ZK1 aus Zeitkanal 3 und Zeitkanal 5 zweier Sendeleitungen von unterschiedlichen Teilnetzen. Analog hierzu besteht der neue Zeitkanal 2 aus der Verknüpfung von Zeitkanal 4 und Zeitkanal 6. Für die Verzögerung der Rahmen um maximal zwei Zeitkanäle ist in jeder Laufzeitausgleinheit LZS ein Empfangspuffer EP mit ein- und ausgangsseitiger Serienparallelwandlungseinheit S/P vorhanden. Außerdem ist eine Rahmentaktableitung und eine Aufbereitungsstufe für den Zeitkanaltakt, der die Serienparallelwandlungseinheiten S/P steuert, und eine Schreib/Lesesteuerung für den Empfangspuffer EP vorgesehen. Die Rahmenkennungsworte RKW der ankommenden Datenströme werden nicht mit dem abgehenden Datenstrom in Richtung taktgebende Busstation BST verknüpft. Sie werden daher nicht im Empfangspuffer EP abgelegt und auch nicht zum Zeitpunkt des Rahmenkennungswortes RKW aus dem Empfangspuffer EP ausgelesen. Um einen definierten Zustand zwischen ankommendem und abgehendem Rahmen zu erhalten, muß der Empfangspuffer EP initialisiert werden. Dabei startet der erste Einschreibvorgang nach Neuinitialisierung mit dem Zeitkanal 1. Sobald dieser Zeitkanal komplett eingelesen ist, wird das Auslesen freigegeben. Fig. 7 zeigt die Initialisierung mit einem 9 Bit breiten Empfangspuffer EP in der Laufzeitausgleinheit. Die einzelnen Zeitkanäle sind in Teil 1 und 2 getrennt. Wie aus Fig. 7 abzuleiten ist, kann eine Laufzeitänderung < 9 Bit ausgeglichen werden. Erhöht sich die Laufzeit in Richtung taktgebender Busstation BST, so kann diese bis zum Pufferüberlauf ausgeglichen werden. Der Empfangspuffer EP sollte mindestens drei Zeitkanäle aufnehmen können.

Im Zeitraum zwischen Rahmenkennungswort RKW des ankommenden Datenstromes und dem Rahmenkennungswort RKW des abgehenden Datenstroms besteht eine Verzögerung von einem Zeitkanal. Nach dem abgehenden Rahmenkennungswort RKW wird der ankommende Datenstrom für die Dauer von zwei Zeitkanälen zwischengespeichert.

Über das Koppelfeld KF erfolgt die Einstellung einer Busstation im Netz. Neben der Zusammenfassung der Datenströme durch verdrahtete wiredor Verknüpfungen (logische ODER Funktion) aller Datenströme angeschlossener Teilnetze, hat dieses Koppelfeld KF noch folgende weitere Aufgaben:
- Einstellung von Fremdtakt- oder Eigenbetrieb,
- Transparentes Durchschalten von Sende- und Empfangsweg zur Realisierung einer Busstation mit minimaler Laufzeit (DBS Funktion).

Sendeweg:

DS - Sendedaten (Daten Richtung taktgebende Station),
TS - Sendetakt (synchroner Takt von Fremdtaktanschluß oder vom Rahmengenerator RF),
SYNS - Synchronisiersignal (z.B. Zeitkanaltakt mit Taktpause während eines Rahmenkennungswortes RKW).

Empfangsweg:

DE - Empfangsdaten (Daten von taktgebender Station),
TE - Empfangstakt (synchroner Takt von Fremdtaktanschluß oder vom Rahmengenerator RG),
SYNE - Synchronisiersignal (z.B. Zeitkanaltakt mit Taktpause während eines Rahmenkennungswortes RKW).

Auf dem Sendeweg findet die logische ODER-Verknüpfung der Daten von Interface und Laufzeitausgleinheit LZS (außer Fremdtaktanschluß) statt. Im Empfangsweg sendet der Fremdtaktanschluß die Daten, welche ungepuffert und unverändert an den anderen Anschlüssen ausgesendet werden. Im Eigenbetrieb der Station muß der Rahmengenerator RG die Sendedaten auf den Empfangsweg übertragen.

Der Rahmengenerator RG erzeugt das Rahmenkennungswort RKW und den Systemtakt im Eigenbetrieb. Er überträgt im Eigenbetrieb die Daten vom Sende- in den Empfangsweg. Die Sendeeinheit SE bildet das Gegenstück zur Laufzeitausgleinheit LZS und ist den eigentlichen Busschnittstellen Optik, Funk oder Bündel vorgeschaltet. Sie ermöglicht das Überschreiben von Zeitkanalinhalten, z.B. Dienstkanal, was für das Netzmanagement erforderlich ist. Die Daten werden in Senderichtung ohne nennenswerte Verzögerung an die Sender weitergeleitet; symbolisiert durch die Durchschalteinrichtung DSE.

Das Netzmanagement und die Ermittlung, welche der Busstationen als taktgebende Busstation BST betrieben wird, erfolgt über einen Dienstkanal, welcher in Opposition zum Rahmenkennungswort RKW steht (Laufzeitminimierung). Dieser Dienstkanal wird in jedem Netzknoten mit der Stationsadresse und der Adresse der taktgebenden Station neu beschrieben (Multiplexen des Dienstkanalinhalts). Schließt sich eine neue Station an das Netz an, so wertet sie den Inhalt des Dienstkanals aus und stellt sich entsprechend ein. Während der Einstellphase sendet sie selbst eine Initialisierungskennung an allen anderen Anschlüssen aus, um andere Busstationen die Übergangsphase anzuzeigen.

Läuft in jedem Netzknoten der Rahmengenerator RG nur taktsynchron, entstehen beim Umschalten auf Fremdtakt keine Synchronismusausfälle mehr. Eine Netzumkonfiguration muß den anderen Busstationen daher über eine Dienstkanalkennung mitgeteilt werden.

Folgende Möglichkeiten bietet der gemultiplexte Dienstkanal:

- sanftes Herunterfahren des Netzes (z.B. bei Stellungswechsel),
- definiertes Schalten und Lösen von Netzverbindungen,
- automatische Netzkonfiguration unter Berücksichtigung von Laufzeiten,
- Übersicht über geschaltete und logisch getrennte Verbindungen mit entsprechenden Partneradressen (graph. Netztopologie),
- Anschaltung weiterer Busstationen ohne Netzstörungen.

Letztere Merkmale lassen sich insbesondere über einen optischen Anschluß realisieren, welcher mit ca. drei verschiedenen Inhalten für den Dienstkanal beschrieben werden kann und diese im Wechsel für jeden Rahmen aussendet.

In Fig. 8 sind für die gleiche Netzkonfiguration wie in Fig. 2 die Systemlaufzeiten für die erfindungsgemäße zeitkanalsynchrone Zusammenfassung der Daten dargestellt. Im Sendeweg wird für jeden Netzknoten eine Durchlaufzeit von 4 $\mu$s (ca. 2 Zeitkanäle) angenommen. Die Netzknoten senden im Empfangsweg die Daten ohne Veränderung wieder aus, so daß es hier nur zu Verzögerungen in Größenordnung von Gatterlaufzeiten (Nanosekundenbereich) kommt. Zum Zeitpunkt O$\mu$s wird ein Rahmen mit eingeschleusten Daten von der Endstelle E1 ausgesendet. Diese Daten stehen zum Zeitpunkt 16 $\mu$s auf der Empfangsleitung für die Endstelle E1 zur Verfügung. Die Systemlaufzeit ist abhängig von der Position der zur jeweiligen Busstation taktgebenden Busstation. Deshalb beträgt für die Endstelle E2 die Systemlaufzeit nur 8 $\mu$s. Im Vergleich zu den Verzögerungen des Systems gemäß Fig. 2 werden die Einsparungen in der Systemlaufzeit deutlich:
Systemlaufzeit bei Zeitkanalsynchronisation: 16 $\mu$s,
Systemlaufzeit bei Rahmensynchronisation: 1375 $\mu$s.

Dies bedeutet eine Verringerung der Systemlaufzeit um 1359 $\mu$s, entsprechend 98,8 %.

Folgende Vorteile stellen sich durch die verringerte Systemlaufzeit ein:

- Kollisionen können erst nach Ablauf der Systemlaufzeit erkannt werden, d.h. bei Zeitkanalsynchronisation ist der nächste Belegungsversuch bereits nach kurzer Zeit möglich.
- Jeder Netzteilnehmer erhält durch die kurze Systemlaufzeit Verarbeitungszeit bis zum nächsten Zugriff auf den Zeitkanal, die sich folgendermaßen ergibt:

Verarbeitungszeit = Rahmendauer - Systemlaufzeit.

Für die Endstelle E1 gilt beispielsweise:

Verarbeitungszeit = 500 $\mu$s - 16 $\mu$s = 484 $\mu$s.

Zu beachten ist, daß beim Verfahren nach der Erfindung die Daten auf den Sende- und Empfangsleitungen in unterschiedlichen Zeitkanälen zu finden sind.

Zur richtigen Zuordnung der Zeitkanäle für Sende- und

Empfangsweg werden die Laufzeiten aus der Netztopologie ermittelt und eine fest vereinbarte Zuordnung zwischen den Rahmen bezüglich Sende- und Empfangsweg getroffen, d.h. der Zeitversatz (Offset) wird fest vorgegeben und ist den jeweiligen Busstationen bekannt.

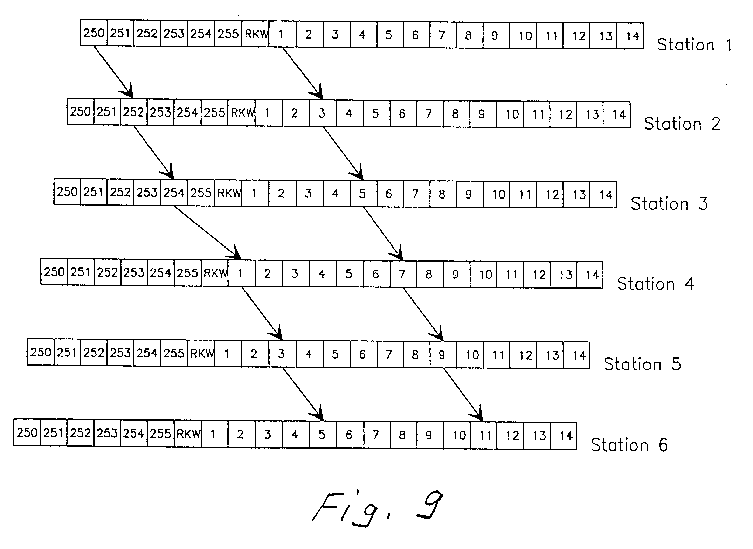

Zu diesem Zweck übermittelt jede Busstation BS die bei ihr vorgesehene fest vorgegebene Laufzeit von z.B. zwei Zeitkanälen im Empfangsweg, d.h. in Richtung taktgebende Station BST, zur nachfolgenden Busstation BS über einen Dienstkanal. Letztere gibt diesen Offset an die nächste Station in Richtung taktgebende Station weiter, indem sie ihn zu ihrem Zeitversatz addiert. Diese Offsetweitergabe von Station zu Station ist aus Fig. 9 ersichtlich. Im dargestellten Beispiel ist die Empfangsrahmensynchronität zu Station 6 dargestellt. Wie aus Fig. 9 weiter ersichtlich ist, bleibt das Rahmenkennungswort RKW bei der Offsetübergabe unberücksichtigt. Ebenso der Dienstkanal. Die Rahmengeneratoren RG jeden Netzknotens müssen für obige Betriebsweise in einem festen Bezug zum Rahmensignal auf dem Empfangsweg gebracht werden. Unter Berücksichtigung der minimalen Laufzeiten im Empfangsweg arbeiten dann alle Rahmengeneratoren nahezu rahmensynchron. Jede Laufzeitausgleichseinheit LZS verzögert einen ankommenden Zeitkanal um einen fest vorgegebenen Wert, hier genau um die Dauer zweier Zeitkanäle. Ist die Anzahl der Netzknoten bis zur taktgebenden Station BST bekannt, so ist der Offset einfach zu ermitteln.

Jede Busstation BS legt in den Dienstkanal auf dem Empfangsweg ihren Offset ab. Hierzu weist jede Busstation einen Dienstkanalspeicher (Fig. 6) auf, der von einer Sendesteuerung aktivierbar ist, die ihre Steuerinformation wiederum aus dem Zeitkanaltakt ableitet. Der Speicherinhalt des Dienstkanalspeichers wird somit mittels der Durchschalteinrichtung DSE auf einem freien Zeitkanalplatz, der als Dienstkanal dient, in den auszusendenden Datenstrom eingeschleust.

Kommt es zu einer Umkonfigurierung im Netz, so ändert sich der Offset von Segment (Anzahl der zusätzlichen/fehlenden Netzknoten) zu Segment und jede Busstation kann sofort die Beziehung zwischen Sende- und Empfangszeitkanal wiederherstellen.

Voraussetzung zur Offsetübergabe nach der Erfindung ist es, daß der Offset von Station zu Station über den Dienstkanal im Empfangsweg permanent oder zumindest in relativ kurzen Zeitabständen übermittelt wird. Außerdem ist der Rahmengenerator in einer Busstation auf den Fremdtakt, der normalerweise von der taktgebenden Busstation vorgegeben wird, zu synchronisieren. Beim Anschalten eines neuen "Taktmasters", d.h. einer neuen Busstation, die als taktgebende Busstation arbeiten soll, muß dafür Sorge getragen werden, daß der auftretende Synchronverlust möglichst schnell wieder hergestellt wird.

Als Daten können beispielsweise digital aufbereitete Sprachsignale, Bildsignale, Steuersignale, Fernwirksignale, Rechnerdaten usw. übertragen werden.

**Patentansprüche**

1.  Betriebsverfahren für ein Zeitmultiplex-Übertragungssystem, welches aus mehreren Teilnetzen besteht, wobei Daten, die in Zeitkanälen eines Rahmens untergebracht sind, zwischen den Teilnetzen austauschbar sind und wobei die Datenströme an Verknüpfungspunkten (K1, K2, K3....) des Netzes zur Weiterleitung verknüpft werden, dadurch gekennzeichnet, daß die Verknüpfung der Datenströme jeweils zeitkanalsynchron vorgenommen wird und daß der durch eine Verknüpfung an einem Verknüpfungspunkt entstehende Zeitversatz bezüglich der Zeitkanäle einem oder mehreren weiteren Verknüpfungspunkten (K1, K2, K3...) des Netzes mitgeteilt wird.

2.  Verfahren nach Anspruch 1, dadurch gekennzeichnet, daß in den Verknüpfungspunkten (K1, K2, K3...) vorgesehene Busstationen (BS) die Zeitkanäle der ankommenden Datenströme jeweils um einen fest vorgegebenen Wert verzögern, der so gewählt ist, daß er der Dauer weniger, z.B. zwei, Zeitkanäle entspricht.

3.  Verfahren nach Anspruch 1 oder 2, dadurch gekennzeichnet, daß jede Busstation (BS) in einem Dienstkanal auf dem Empfangsweg ihren Zeitversatz einer nachfolgenden Busstation (BS) übermittelt und daß die nachfolgende Busstation (BS) ihren Zeitversatz durch Addition aus ihrem fest vorgegebenen Verzögerungswert und dem über den Dienstkanal übermittelten Zeitversatz aufbereitet.

4.  Verfahren nach einem der Ansprüche 1 bis 3, daß bei der Ermittlung des Zeitversatzes die Zeiten für die Dauer des Dienstkanals und von Rahmenkennungsworten (RKW) nicht berücksichtigt werden.

5.  Zeitmultiplex-Übertragungssystem bestehend aus mehreren Teilnetzen, wobei an Verknüpfungspunkten (K1, K2, K3...) des Übertragungssystems Busstationen (BS) vorgesehen sind, daß in den Busstationen (BS) Mittel zur Übermittlung des Zeitversatzes bei der Verknüpfung von Datenströmen angeschlossener Teilnetze in einem Dienstkanal sowie Mittel zur Auswertung des Dateninhalts des Dienstkanals vorgesehen sind.

6.  Übertragungssystem nach Anspruch 5, dadurch gekennzeichnet, daß in den Busstationen (BS) Rahmengeneratoren (RG) vorgesehen sind, die so eingestellt oder so steuerbar sind, daß sie rahmensynchron zueinander arbeiten und daß in den Busstationen (BS) Laufzeitausgleichseinheiten (LZS) untergebracht sind zur Verzögerung jedes ankommenden Zeitkanals um einen vorbestimmten Wert, z.B. entsprechend der Dauer zweier Zeitkanäle.

EP 0 603 641 A2

| RKW | ZK 1 | ZK 2 | ZK 3 | ZK 4 | ZK 5 | | ZK 252 | ZK 253 | ZK 254 | ZK 255 |
|------|------|------|------|------|------|---|--------|--------|--------|--------|

Fig. 1

| RKW/1 | RKW/2 | 1/1 | 1/2 | 2/1 | 2/2 | 3/1 | 3/2 | 4/1 | 4/2 | 5/1 | 5/2 |
|-------|-------|-----|-----|-----|-----|-----|-----|-----|-----|-----|-----|

Fig. 7

| 253/1 | 253/2 | 254/1 | 254/2 | 255/1 | 255/2 | RKW/1 | RKW/2 | 1/1 | 1/2 | 2/1 | 2/2 |
|-------|-------|-------|-------|-------|-------|-------|-------|-----|-----|-----|-----|

Fig. 2

Richtung taktgebende
Station ↑

| ZK3 | | RKW | | ZK.5 |
| ZK.4 | | ZK.1 | | ZK.6 |
| ZK.5 | ....... | ZK.2 | ....... | ZK.7 |
| ZK.6 | ....... | ZK3 | ....... | ZK.8 |
| ZK.7 | ....... | ZK.4 | ....... | ZK.9 |
| ZK.8 | ....... | ZK.5 | ....... | ZK.10 |
| ZK.9 | ....... | ZK.6 | ....... | ZK.11 |
| ZK.10 | ....... | ZK.7 | ....... | ZK.12 |
| ZK.11 | ....... | ZK.8 | ....... | ZK.13 |
| ZK.12 | ....... | ZK.9 | ....... | ZK.14 |
| | | ZK.10 | | |

ankommende
Sendeleitung ↑

ankommende
Sendeleitung ↑

Fig.3

Fig. 4

Busstation

Fig. 5

Fig. 6

Optik

Sendeeinheit
SE

Rahmentakt-
Ableitung

RKW

Zeitkanaltakt
Schreib/Lese-
Steuerung

Empfangspuffer

EP

Dienstkanalspeicher

Sendesteuerung

DSE

LZS

DE
TE
SYNE

Systembus

Koppelfeld

DS
TS
SYNS

RG

EP 0 603 641 A2

16us     16us     16us     16us

| taktgebende Station BST | EL → ← SL | Netz- knoten K3 | EL → ← SL | Netz- knoten K2 | EL → ← SL | Netz- knoten K1 | EL → ← SL | Endstelle E1 |

12us     8us     4us     0us

Ous

Endstelle E2

8us

Fig. 8

| 250 | 251 | 252 | 253 | 254 | 255 | RKW | 1 | 2 | 3 | 4 | 5 | 6 | 7 | 8 | 9 | 10 | 11 | 12 | 13 | 14 | Station 1 |

| 250 | 251 | 252 | 253 | 254 | 255 | RKW | 1 | 2 | 3 | 4 | 5 | 6 | 7 | 8 | 9 | 10 | 11 | 12 | 13 | 14 | Station 2 |

| 250 | 251 | 252 | 253 | 254 | 255 | RKW | 1 | 2 | 3 | 4 | 5 | 6 | 7 | 8 | 9 | 10 | 11 | 12 | 13 | 14 | Station 3 |

| 250 | 251 | 252 | 253 | 254 | 255 | RKW | 1 | 2 | 3 | 4 | 5 | 6 | 7 | 8 | 9 | 10 | 11 | 12 | 13 | 14 | Station 4 |

| 250 | 251 | 252 | 253 | 254 | 255 | RKW | 1 | 2 | 3 | 4 | 5 | 6 | 7 | 8 | 9 | 10 | 11 | 12 | 13 | 14 | Station 5 |

| 250 | 251 | 252 | 253 | 254 | 255 | RKW | 1 | 2 | 3 | 4 | 5 | 6 | 7 | 8 | 9 | 10 | 11 | 12 | 13 | 14 | Station 6 |

Fig. 9